# EUROPÄISCHE PATENTSCHRIFT

(11) **EP 1 206 663 B1**
(45) Veröffentlichungstag und Bekanntmachung des Hinweises auf die Patenterteilung: **23.04.2008**
(21) Anmeldenummer: 00954478.4
(22) Anmeldetag: 12.07.2000
(51) Int. Cl.: F17C 13/04, F17C 9/04, F17C 13/02, F16K 11/044

(54) **VERFAHREN ZUR REGELUNG DES DRUCKS IN EINEM KRYOTANK UND DAFÜR GEEIGNETE VORRICHTUNG**
METHOD FOR ADJUSTING THE PRESSURE IN A CRYOGENIC TANK AND CORRESPONDING DEVICE
PROCEDE DE REGULATION DE LA PRESSION DANS UN RESERVOIR CRYOGENIQUE ET DISPOSITIF CORRESPONDANT

(30) Priorität: 27.07.1999 DE 19934457
(43) Veröffentlichungstag der Anmeldung: 22.05.2002
(73) Patentinhaber: Air Liquide Deutschland GmbH, 40235 Düsseldorf (DE); Samson AG, 60314 Frankfurt (DE)
(72) Erfinder: MICHEL, Friedel, 40699 Erkrath (DE); KOSER, Heinz, 63110 Rodgau (DE); SCHMITT, Rainer, 63454 Hanau (DE)
(74) Vertreter: Kahlhöfer, Hermann
(86) Internationale Anmeldenummer: PCT/EP2000/006603
(87) Internationale Veröffentlichungsnummer: WO 2001/007825

(56) Entgegenhaltungen:
- CH-A- 102 269
- DE-A- 3 844 327
- DE-A- 4 320 556
- US-A- 3 650 290
- US-A- 3 776 275
- US-A- 5 373 700

## Beschreibung

Die Erfindung betrifft ein Verfahren für die Regelung des Tankdrucks in einem ein kaltes Gas enthaltenden Kryotank bei Entnahme eines Verbraucher-Hauptstromes, wobei erwärmtes Gas als in Abhängigkeit vom Tankdruck geregelter Heizgas-Nebenstrom durch eine Rohrleitung durch den Kryotank geleitet wird.

Weiterhin betrifft die Erfindung eine Vorrichtung für die Regelung des Tankdrucks in einem Kryotank bei Entnahme mindestens eines Verbraucher-Hauptstromes, mit einem thermisch isolierten Speicherbehälter für die Aufnahme eines kalten Gases, der mit einer Entnahmeleitung für die Entnahme eines Gasstromes verbunden ist, mit einer Vorrichtung zum Erwärmen des Gasstromes, einer Rohrleitung, welche durch den Speicherbehälter führt, und mit einer Druckregel-Einrichtung, mittels der der Gasstrom in Abhängigkeit vom Tankdruck geregelt als Heizgas-Nebenstrom durch die Rohrleitung geleitet wird.

Ein Kryotank ist ein wärmeisolierter Speicherbehälter, in dem flüssige, tiefkalte Gase gespeichert werden. Unter einem "kalten Gas" werden hier und im folgenden auch verflüssigte Gase verstanden. Solche Kryotanks werden beispielsweise in der Kraftfahrzeugtechnik als Treibstofftanks eingesetzt. Sie können flüssigen Wasserstoff, flüssiges Erdgas, flüssigen Stickstoff oder dergleichen enthalten. Insbesondere Wasserstoff stellt einen besonders umweltfreundlichen Treibstoff dar, weil bei seiner Verbrennung nur Wasserdampf entsteht. Wasserstoff werden deshalb große Bedeutung für die Fahrzeugkonzepte der Zukunft eingeräumt. Zur Verflüssigung wird Wasserstoff auf eine Temperatur unterhalb von - 253 °C abgekühlt und in flüssiger Form unter geringem Überdruck in einem derartigen Kryotank gespeichert. Bei Entnahme von Gas oder verflüssigtem Gas kommt es zu einem Druckabfall im Kryotank. Für viele Anwendungen, wie etwa dem oben erwähnten Einsatz als Treibstofftank, ist aber ein möglichst konstanter Tankdruck erforderlich.

Für die Druckregelung bei Entnahme eines Verbraucher-Hauptstromes aus einem Kryotank wird in der DE-A 196 45 492 ein Verfahren und eine Vorrichtung gemäß der eingangs genannten Gattung in Form eines sogenannten "Eigengas-Konvektors" vorgeschlagen, wobei zur Aufrechterhaltung oder Erhöhung des Drucks erwärmtes Gas als "Heizgas-Nebenstrom" über eine durch den Speicherbehälter eines Kryotanks verlegte Rohrleitung geleitet wird. Die dadurch in den Kryotank eingebrachte Wärme fördert die Verdampfung von verflüssigtem Gas und führt damit zu einer Erhöhung der Tankdrucks. Der durch Entnahme des Hauptstromes bewirkte Druckabfall im Speicherbehälter kann so durch geregelte Zirkulation des warmen Nebenstromes wieder ausgeglichen werden. Der Heizgas-Nebenstrom wird bei der bekannten Vorrichtung in einem geschlossenen Kreislauf geführt und die Durchflußmenge über ein Regelventil in Abhängigkeit vom Tankdruck geregelt. Die Durchflußmenge des erforderlichen Nebenstromes steht zwar in einem bestimmten Verhältnis zur Durchflußmenge des dem Verbraucher zugeführten Hauptstromes, kann aber je nach Bauweise und Betriebsbedingungen des Kryotanks und je nach Anforderungen des Verbrauchers stark variieren. Es ergibt sich auch das Problem, daß der Hauptstrom je nach Verbrauchsmenge unterschiedlich stark angedrosselt werden muß, wobei der Druckabfall zwischen Speicherbehälter und Verbraucher möglichst konstant bleiben soll. Mit der bekannten Vorrichtung und dem bekannten Regelungsverfahren sind diese Anforderungen nur mit hohem regelungstechnischem und apparativem Aufwand zu gewährleisten.

Aus der DE-A-43 20 556 ist ein Speicherbehälter für kryogene Medien und ein Verfahren zum Betreiben eines Kraftfahrzeuges mit flüssigem und/oder gasförmigem Wasserstoff aus einem solchen Speicherbehälter bekannt. Das hier offenbarte System weist ein relativ großvolumiges Regelsystem zur Zuführung des Wasserstoffs zum Motor des Kraftfahrzeuges auf, welches die Regelung der Wasserstoffzufuhr bei dynamischen Änderungen der benötigten Wasserstoffmenge erschwert.

Der Erfindung liegt die Aufgabe zugrunde, ein einfaches und betriebssicheres Verfahren für die Regelung des Hauptstroms und des Nebenstromes anzugeben, und eine preisgünstige Vorrichtung dafür bereitzustellen.

Hinsichtlich des Verfahrens wird diese Aufgabe ausgehend von dem bekannten Verfahren erfindungsgemäß dadurch gelöst, daß der Nebenstrom nach Durchströmen des Kryotanks und der Hauptstrom einer nachgeordneten Druckregel-Einrichtung zugeführt werden, die eine erste einstellbare Drossel für den Nebenstrom und eine zweite einstellbare Drossel für den Hauptstrom aufweist, wobei die Drosseln derart miteinander gekoppelt sind, daß sie in Abhängigkeit vom Tankdruck gegensinnig geöffnet und geschlossen werden.

Der Hauptstrom wird einem Verbraucher zugeführt. Der Nebenstrom durchfließt den Kryotank als Heizgas-Strom in einer Rohrleitung und dient so durch Wärmeeintrag zur Erhöhung des Tankdrucks. Für die Einstellung der Durchflußmengen von Hauptstrom und Nebenstrom ist jeweils eine einstellbare Drossel vorgesehen, mittels der der minimale freie Strömungsquerschnitt für den Hauptstrom bzw. für den Nebenstrom einstellbar ist. Die beiden Drosseln sind dabei so miteinander gekoppelt, daß eine Vergrößerung des Strömungsquerschnittes bei der einen Drossel mit einer Verringerung des Strömungsquerschnittes bei der anderen Drossel einhergeht - und umgekehrt. Der Nebenstrom wird in Abhängigkeit vom Tankdruck mittels der ersten Drossel eingestellt. Da die erste Drossel mit der zweiten Drossel für den Hauptstrom gekoppelt ist, wird bei einer Änderung des freien Strömungsquerschnitts der ersten Drossel gleichzeitig auch der freie Strömungsquerschnitt für den Hauptstrom beeinflußt. Das erfindungsgemäße Verfahren ermöglicht so besonders einfach eine Regelung von Hauptstrom und Nebenstrom unter weitgehender Konstanthaltung des Tankdrucks mit einer einzigen Druckregel-Einrichtung. Bei einem zu geringen Tankdruck wird die Drossel für den Nebenstrom geöffnet oder weiter geöffnet und gleichzeitig die Drossel für den Hauptstrom verengt. Durch die Erhöhung der Durchflußmenge für den Nebenstrom wird ein größerer Wärmeeintrag in den Kryotank und damit ein Druckanstieg erzeugt. Der Druckanstieg bewirkt wiederum ein Schließen der ersten Drossel und eine entsprechende Reduzierung des Nebenstromes und gleichzeitig eine Vergrößerung des Strömungsquerschnittes für den Hauptstrom.

Als besonders einfach erweist sich eine Verfahrensweise, bei der dem Kryotank ein Primär-Gasstrom entnommen wird, aus dem der Hauptstrom und der Nebenstrom abgezweigt werden. Hauptstrom und Nebenstrom werden aus einem gemeinsamen Primär-Gasstrom abgezweigt. Es ist daher nur eine einzige Entnahmeleitung erforderlich. Die Durchflußmengen für den Hauptstrom und für den Nebenstrom werden durch die Druckregel-Einrichtung geregelt, die - in Strömungsrichtung des Primär-Gasstromes gesehen - hinter der Abzweigstelle angeordnet ist.

Es hat sich als günstig erwiesen, als Druckregel-Einrichtung einen Dreiwege-Druckregler einzusetzen und den Hauptstrom einem ersten Gaseintritt und den Nebenstrom einem zweiten Gaseintritt des Dreiwege-Druckreglers zuzuführen. Der Dreiwege-Druckregler weist demnach zwei Gaseintritte und einen Gasaustritt in Richtung des Verbrauchers auf, wobei der Hauptstrom und der Nebenstrom voneinander getrennt dem Dreiwege-Druckregler zugeführt werden. Bei einem Druckgefälle zwischen Tankdruck und Dreiwege-Druckregler ermöglicht es diese Verfahrensweise, beide Gasströme in Richtung des Druckgefälles zu leiten, so daß Hilfsmaßnahmen für die Erzeugung der Gasströmung, etwa durch Gebläse oder Pumpen, nicht erforderlich sind. Ein derartiges Druckgefälle kann zum Beispiel erzeugt werden, indem das im Kryotank enthaltene kalte oder verflüssigte Gas erwärmt wird. Durch die Erwärmung nimmt die Dichte des Gases ab und das Volumen und der Tankdruck entsprechend zu.

Vorteilhafterweise wird der Nebenstrom durch den Kryotank geleitet, danach erneut erwärmt und anschließend dem zweiten Gaseintritt der Druckregel-Einrichtung zugeführt. Der im Kryotank abgekühlte Nebenstrom kann zum Beispiel in einem auf Raumtemperatur gehaltenen Wärmetauscher erwärmt werden, ohne daß hierfür zusätzliche Heizmittel erforderlich sind. Durch die Erwärmung des Tankinhaltes durch den Nebenstrom wird ein Druckgefälle erzeugt, so daß der Nebenstrom ohne weitere Hilfsenergie in Richtung der Druckregel-Einrichtung strömt.

Eine weitere Verbesserung ergibt sich, wenn der Nebenstrom - in Strömungsrichtung gesehen - im Bereich nach der ersten Drossel dem Hauptstrom hinzugefügt wird. Diese Verfahrensweise hat den Vorteil, daß bei geöffneter erster Drossel - und dementsprechend verringertem freiem Strömungsquerschnitt für den Hauptstrom - das Gas, das die erste Drossel durchströmt ebenfalls dem Verbraucher zugeführt werden kann. Dies erleichtert die Aufrechterhaltung des Verbraucher-Hauptstromes und vermeidet Gasverluste.

Bei einer Verfahrensvariante, bei der das Gas im Kryotank in einer flüssigen Phase und einer gasförmigen Phase vorliegt, hat es sich als günstig erwiesen, den Verbraucher-Hauptstrom aus der gasförmigen Phase zu entnehmen. Bei einer Entnahme von flüssigem Gas aus dem Kryotank ist zwar eine vergleichsweise geringere Energie zur Aufrechterhaltung des Tankdrucks erforderlich, jedoch kann es in einem nachgeschalteten Verdampfer zu Verdampfungspulsationen kommen. Demgegenüber wird bei der erfindungsgemäßen Verfahrensvariante dem Kryotank keine Flüssigkeit, sondern kaltes Gas entnommen. Die Flüssigkeit wird also bereits im Kryotank verdampft. Das größere Flüssigkeitsvolumen im Kryotank verhindert Verdampfungspulsationen und wirkt insoweit als Dämpfungsvolumen. Bei der dafür geeigneten Vorrichtung ragt die Entnahmeleitung zur Entnahme des Verbraucher-Hauptstromes demnach nicht in die Flüssigphase, sondern sie mündet in der Gasphase darüber.

Das erfindungsgemäße Verfahren hat sich insbesondere für die Regelung des Tankdrucks bewährt, wenn als Gas verflüssigter Wasserstoff, verflüssigter Stickstoff oder flüssiges Erdgas eingesetzt werden.

Hinsichtlich der Vorrichtung wird die oben angegebene Aufgabe erfindungsgemäß dadurch gelöst, daß die Druckregel-Einrichtung eine erste einstellbare Drossel für die Regelung des Nebenstromes und eine zweite einstellbare Drossel für die Regelung des Hauptstromes aufweist, wobei die Drosseln derart miteinander gekoppelt sind, daß sie in Abhängigkeit vom Tankdruck gegensinnig geöffnet und geschlossen werden.

Der Hauptstrom wird einem Verbraucher zugeführt. Der Nebenstrom durchfließt den Kryotank als Heizgas-Strom in einer Rohrleitung und führt so durch Wärmeeintrag zur Erhöhung des Tankdrucks. Der Nebenstrom wird in Abhängigkeit vom Tankdruck geregelt. Für die Einstellung der Durchflußmengen von Hauptstrom und Nebenstrom ist jeweils eine Drossel einer gemeinsamen Druckregel-Einrichtung vorgesehen, mittels der der minimale freie Strömungsquerschnitt für den Hauptstrom bzw. für den Nebenstrom einstellbar ist. Die beiden Drosseln sind dabei so miteinander gekoppelt, daß eine Vergrößerung des freien Strömungsquerschnittes der einen Drossel mit einer Verringerung des freien Strömungsquerschnittes bei der anderen Drossel einhergeht - und umgekehrt. Die erfindungsgemäße Vorrichtung ermöglicht so eine Regelung von Hauptstrom und Nebenstrom unter weitgehender Konstanthaltung des Tankdrucks mit einer einzigen Druckregel-Einrichtung. Bei einem zu geringen Tankdruck wird die Drossel für den Nebenstrom geöffnet oder weiter geöffnet und gleichzeitig die Drossel für den Hauptstrom verengt. Durch die Erhöhung der Durchflußmenge für den Nebenstrom wird ein größerer Wärmeeintrag in den Kryotank und damit ein Druckanstieg erzeugt. Der Druckanstieg bewirkt wiederum ein Schließen der ersten Drossel und eine entsprechende Reduzierung des Nebenstromes und gleichzeitig eine Vergrößerung des freien Strömungsquerschnittes für den Hauptstrom. Dadurch ergibt sich ein selbstregelndes System

Als günstig hat es sich erwiesen, die Druckregel-Einrichtung als Dreiwege-Druckregler auszubilden, der einen Gasaustritt, einen ersten Gaseintritt für den Hauptstrom und einen zweiten Gaseintritt für den Nebenstrom aufweist. Der Dreiwege-Druckregler weist demnach zwei Gaseintritte sowie einen Gasaustritt in Richtung des Verbrauchers auf, wobei der Hauptstrom und der Nebenstrom voneinander getrennt dem Dreiwege-Druckregler zugeführt werden. Diese Ausführungsform der erfindungsgemäßen Vorrichtung ermöglicht bei einem Druckgefälle zwischen Tankdruck und Dreiwege-Druckregler beide Gasströme ohne weitere Hilfsenergie in Richtung des Druckgefälles zu leiten, so daß etwa Gebläse oder Pumpen nicht erforderlich sind. Ein derartiges Druckgefälle kann erzeugt werden, indem dem Kryotank Wärme zugeführt wird, indem zum Beispiel erwärmtes Gas durch den Kryotank geleitet wird. Durch die Erwärmung nimmt die Dichte des Gases im Kryotank ab und das Volumen und der Druck entsprechend zu.

Besonders einfach und kostengünstig gestaltet sich eine Ausführungsform der erfindungsgemäßen Vorrichtung, bei der die erste Drossel und die zweite Drossel über ein in Abhängigkeit vom Tankdruck bewegbares Kopplungselement mechanisch miteinander verbunden sind.

Ein geeignetes Kopplungselement umfaßt eine Ventilstange, die in Abhängigkeit vom Tankdruck in Richtung ihrer Längsachse bewegbar ist, und an der ein erster Ventilkegel und ein zweiter Ventilkegel beabstandet voneinander gehalten werden, wobei die Drosseln jeweils einen Ventilsitz für die Aufnahme eines der Ventilkegel aufweisend durch Bewegung der Ventilstange geöffnet oder geschlossen werden. Bei der Ventilstange handelt es sich um ein längliches Bauteil, beispielsweise einen Zylinder, Hohlzylinder oder Kegel, an dem mindestens zwei Ventilkegel starr oder beweglich gehalten werden. Die Position der Ventilstange und damit die Position der Ventilkegel ergibt sich in Abhängigkeit vom Tankdruck in Verbindung mit einem vorgegebenen Solldruck. Durch Bewegung der Ventilstange wird der eine Ventilkegel in Richtung seines Ventilsitzes bewegt und damit der freie Strömungsquerschnitt der betreffenden Drossel verringert, während der freie Strömungsquerschnitt der anderen Drossel erweitert wird, so daß durch die Bewegung der Ventilstange die Ventilsitze der ersten und der zweiten Drossel gegensinnig geöffnet und geschlossen werden. Unter einem Ventilkegel im Sinne dieser Erfindung wird ein Schließelement verstanden, das dazu geeignet ist, in Verbindung mit dem korrespondierenden Ventilsitz den freien Strömungsquerschnitt einer Drossel zu verändern. Es ist dafür nicht erforderlich, daß der Ventilkegel Kegelform in geometrischem Sinn aufweist.

Vorteilhafterweise erstreckt sich die Ventilstange zwischen einem oberen Druckraum, an dem der Tankdruck anliegt und einem unteren geschlossenen Druckraum, in dem ein Druckelement, an dem ein vorgegebener Solldruck anliegt, auf die Ventilstange einwirkt. Bei dem Druckelement kann es sich um ein mechanisches Bauteil, beispielsweise eine Membran, eine Feder oder ein Balg, oder um eine gasförmige oder flüssige Druckfeder handeln. Die Druckdifferenz zwischen Tankdruck und Solldruck bestimmt die Position der Ventilstange. Diese Druckdifferenz ist besonders einfach dadurch einstellbar, daß die Ventilstange eine Bohrung aufweist, die den oberen und den unteren Druckraum fluidisch verbindet. Hierfür ist es erforderlich, daß der untere Druckraum geschlossen, also nach außen abgedichtet ist.

Eine weitere Verbesserung ergibt sich, wenn die Bohrung mit einer Drosselstelle versehen ist. Die Drosselstelle dient zur Dämpfung von Schwingungen, die durch Druckschwankungen hervorgerufen werden.

Besonders bewährt hat es sich, die Ventilstange durch mindestens zwei beabstandet voneinander angeordnete Führungselemente zu führen. Die Führungselemente verhindern ein Verkippen der Ventilstange und gewährleisten so eine exakte axiale Bewegung der Ventilkegel in Richtung der Ventilstangen-Längsachse.

Besonders einfach gestaltet sich eine Ausführungsform der erfindungsgemäßen Vorrichtung, bei der die Druckregel-Einrichtung ein Gehäuse mit einem abnehmbaren Oberteil und mit einem Unterteil aufweist, wobei eines der Führungselemente im Oberteil und das andere Führungselement im Unterteil ausgebildet ist. Das abnehmbare Oberteil ermöglicht eine einfache Montage der Ventilstange.

Vorteilhafterweise ist bei mindestens einem der Ventilkegel die Oberfläche ganz oder teilweise aus Kunststoff, vorzugsweise aus Polyamid, ausgebildet. Der Ventilkegel kann vollständig aus dem Kunststoff bestehen. Er kann aber auch mindestens in denjenigen Oberflächenbereichen, der mit dem jeweiligen Ventilsitz in Berührung kommen mit einer Kunststoffschicht versehen sein. Dadurch werden Geräusche vermieden oder vermindert, die durch Schwingungen des Ventilkegels im jeweiligen Ventilsitz entstehen können. Alternativ oder ergänzend dazu kann auch der Ventilsitz mit einer entsprechenden Kunststoffoberfläche versehen sein.

Die Erfindung wir nachfolgend anhand von Ausführungsbeispielen und einer Patentzeichnung näher erläutert. In der Zeichnung zeigen im einzelnen in schematischer Darstellung:
- **Figur 1**: ein System für die Regelung des Tankdrucks in einem Fahrzeugtank für flüssigen Wasserstoff, und
- **Figur 2**: ein für das Druckregelsystem gemäß Figur 1 geeigneten Dreiwege-Druckregler.

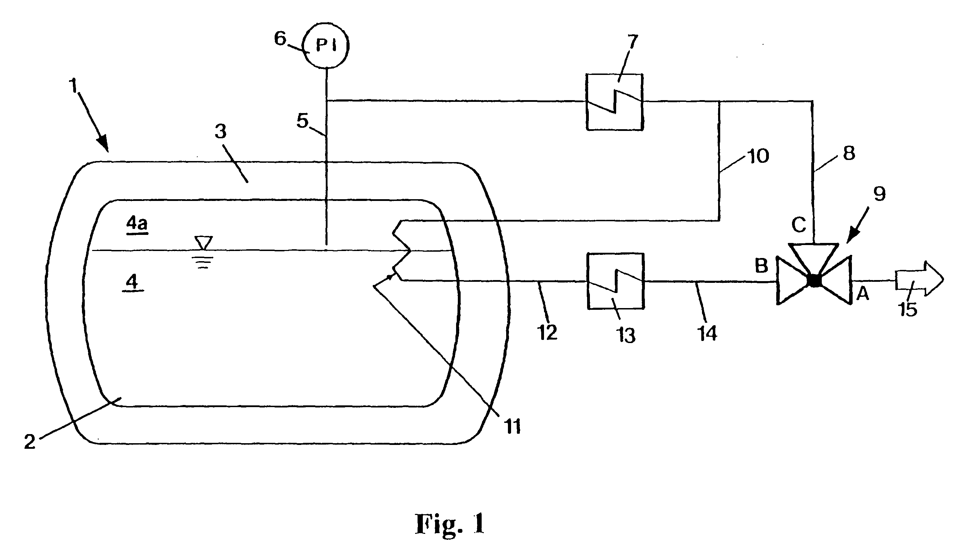

Der in Figur 1 dargestellte Kryotank 1 besteht aus einem Speicherbehälter 2 für tiefkalten, flüssigen Wasserstoff 4 mit einem Fassungsvermögen von 100 Liter und einem Vakuum-Isolationsmantel 3. Durch den Isolationsmantel 3 erstreckt sich vakuumdicht eine Entnahmeleitung 5, über die Wasserstoff aus dem Speicherbehälter 2 entnommen werden kann. Die Entnahmeleitung 5 endet in der Gasphase 4a über der Oberfläche der Flüssigkeit. Die Entnahmeleitung ist mit einem Manometer 6 verbunden, an dem der Tankdruck im Speicherbehälter 2 abgelesen werden kann, der auf 5 bar eingestellt ist. Die Entnahmeleitung 5 wird über einen ersten Wärmetauscher 7 geleitet, in dem der entnommene, kalte Wasserstoff erwärmt wird. Bei dem Wärmetauscher 7 handelt es sich um einen Plattenwärmetauscher, der bei erhöhter Temperatur (oberhalb Raumtemperatur) gehalten wird. Anschließend verzweigt die Entnahmeleitung 5 in eine Hauptstrom-Leitung 8, durch die über einen Dreiwege-Druckregler 9 ein erster Teilstrom (im folgenden als "Hauptstrom" bezeichnet) einem Verbraucher zugeführt wird, und in eine Heizgasleitung 10, durch die einem innerhalb des Speicherbehälters 2 angeordneten Konvektor 11 ein weiterer Teilstrom (im folgenden als "Nebenstrom" bezeichnet) aus gasförmigem, erwärmtem Wasserstoff zugeführt wird. Für die Zuführung des Nebenstromes in den Konvektor 11 ist eine vakuumdichte Durchführung für die Heizgasleitung 10 durch den Isolationsmantel 3 vorgesehen. Der Konvektor 11 ist im Ausführungsbeispiel als gewendeltes Edelstahlrohr mit einer Länge von 1 m und einem Innendurchmesser von 12 mm ausgebildet. Vom Konvektor 11, der mindestens teilweise in den flüssigen Wasserstoff 4 eintaucht, führt eine weitere vakuumdichte Durchführung über eine Leitung 12 zu einem zweiten Wärmetauscher 13 und von dort über eine Nebenstrom-Leitung 14 zu dem Dreiwege-Druckregler 9. Der Dreiwege-Druckregler 9 weist drei Anschlüsse auf, wobei in Figur 1 der Gaseintritt für die Hauptstrom-Leitung 8 mit "C", der Gaseintritt für die Nebenstrom-Leitung 14 mit "B" und der Gasaustritt zum Verbraucher mit "A" bezeichnet sind. Die Strömungsrichtung des Verbraucher-Gasstromes ist mit dem Richtungspfeil 15 gekennzeichnet.

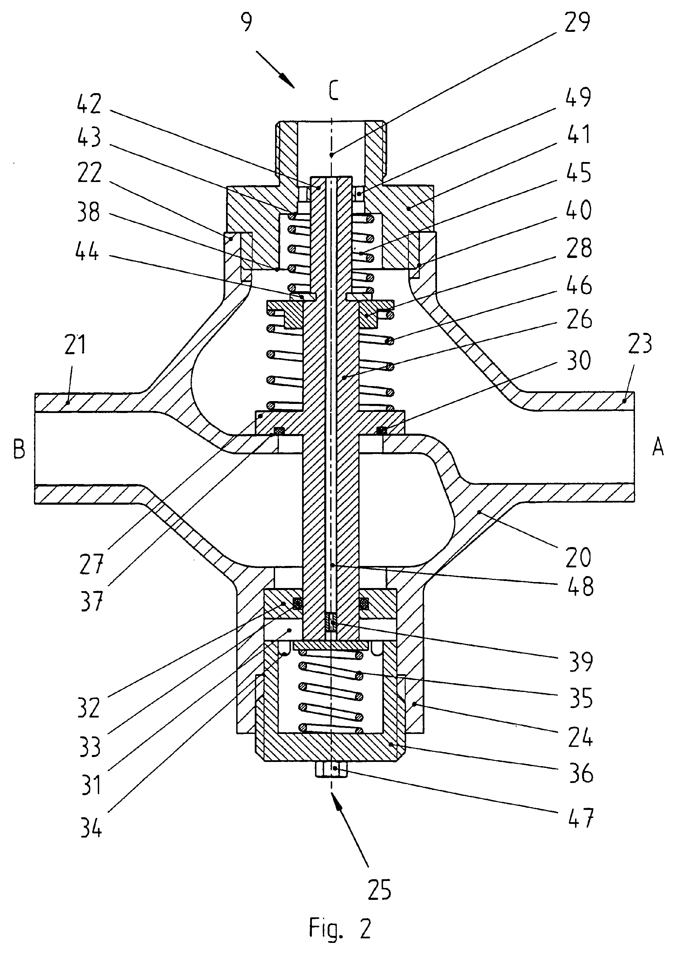

Im folgenden wird eine Ausführungsform des Dreiwege-Druckreglers 9 und ein Beispiel für seine Funktionsweise anhand der schematischen Darstellung in Figur 2 näher erläutert.

Das Gehäuse 20 des Dreiwege-Druckreglers 9 weist einen Anschlußstutzen 21 für die Nebenstrom-Leitung 14 (Figur 1), einen Anschlußstutzen 22 für die Hauptstrom-Leitung 8 (Figur 1), einen Anschlußstutzen 23 für den Verbraucher-Gasstrom und eine Aufnahme 24 für einen Sollwertsteller 25 auf. Innerhalb des Gehäuses 20 ist ein Regelelement in Form einer hohlzylindrischen Ventilstange 26 angeordnet, die in Richtung ihrer Längsachse 29 bewegbar ist. An der Ventilstange 26 werden ein erster Ventilkegel 27 starr und ein zweiter Ventilkegel 28 reibschlüssig gehalten. Die beiden Ventilkegel 27, 28 sind jeweils einem ersten Ventilsitz 37 bzw. einem zweiten Ventilsitz 38 zugeordnet, wobei Ventilkegel 27, 28 und der jeweilige Ventilsitz 37, 38 eine erste Drosseleinrichtung (27, 37) bzw. eine zweite Drosseleinrichtung (28, 38) bilden. Die zweite Drosseleinrichtung (28, 38) definiert den freien Strömungsquerschnitt für den Hauptstrom von "C" nach "A" und die erste Drosseleinrichtung (27, 37) gibt den freien Strömungsquerschnitt für den Nebenstrom von "B" nach "A" vor. Durch Auf- und Abbewegung der Ventilstange 26 werden die Drosseleinrichtungen (27, 37) bzw. (28, 38) geöffnet oder geschlossen, d.h. es werden die jeweiligen freien Strömungsquerschnitte vergrößert oder verkleinert. Dabei ist der erste Ventilsitz 37 mit einem elastomeren Dichtring 30 versehen, so daß die erste Drosseleinrichtung (27, 37) durch Absenken des ersten Ventilkegels 27 gasdicht verschließbar ist. Demgegenüber ist die zweite Drosseleinrichtung (28, 38) in der Regel nicht vollständig geschlossen. Zur Vermeidung von Geräuschen beim Öffnen und Schließen des zweiten Ventilsitzes 38 besteht der zweite Ventilkegel 28 aus Polyamid.
Mit ihrem unteren Ende erstreckt sich die Ventilstange 26 durch ein Führungselement 32 in einen Druckraum 31, der in der Aufnahme 24 des Gehäuses 20 ausgebildet ist. Der Druckraum 31 ist nach oben mittels des Führungselementes 32 gasdicht verschlossen, das zu diesem Zweck mit einem an der Ventilstange 26 anliegenden Dichtring 33 versehen ist. Nach unten hin ist der Druckraum 31 von einer Membran 34 begrenzt, die an der unteren Stirnseite der Ventilstange 26 anliegt. Die Membran 34 steht mit einem Federelement 35 und dieses mit einem Gehäuseeinsatz 36 in Wirkverbindung. Über das Federelement 35 und den Gehäuseeinsatz 36, der mit einem Außengewinde versehen und mittels einer Stellschraube 47 in Richtung der Längsachse 29 bewegbar ist, wird der Sollwert des Tankdrucks auf der dem Federelement 35 zugewandten Oberseite der Membran 34 erzeugt.
Die Ventilstange 26 ist mit einer Innenbohrung 48 versehen, über die eine Druckverbindung zwischen dem Druckraum 31 und dem am oberen Ende der Ventilstange 26 anliegenden Druck, der abgesehen von einem Druckabfall über die Leitung 8 (Figur 1) etwa dem Tankdruck entspricht, hergestellt wird. Dadurch wirkt auf die der Ventilstange 26 zugewandte Unterseite der Membran 34 ein etwa dem Tankdruck entsprechender Druck. Die Druckdifferenz zwischen dem Solldruck und dem Tankdruck bestimmt Art und Umfang der Deformation der Membran 34 und damit die axiale Position der Ventilstange 26 und der daran gehaltenen Ventilkegel 27,28.

Zur Erzeugung einer Drosselstelle 39 ist die Innenbohrung 48 lokal verengt. Durch die Drosselstelle 39 werden kurzfristige Schwankungen des Tankdrucks im Druckraum 31 verzögert wirksam und dadurch gedämpft.

Der Anschlußstutzen 22 für die Hauptstrom-Leitung 8 (Figur 1) ist mit einem Innengewinde 40 versehen, in das ein hülsenförmiges Oberteil 41 eingeschraubt ist. Das obere Ende 42 der Ventilstange 26 ragt in die Öffnung des Oberteils 41, das in einem inneren Bereich als Führungselement 49 ausgebildet ist. Das Führungselement 49 ermöglicht eine exakt axial geführte Bewegung der Ventilstange 26 mit geringer Reibung unter gleichzeitiger Beibehaltung eines möglichst großen freien Strömungsquerschnitts für den Hauptstrom von C nach A. Zwischen einem Rücksprung 43 in der axialen Öffnung des Oberteils 41 und einem mit der Ventilstange 26 formschlüssig verbundenen Federring 44 ist eine Druckfeder 45 eingepaßt, die die Rückstellkraft für die Ventilstange 26 gegen das erste Federelement 35 liefert. Die Druckfeder 45 erfüllt auch eine Sicherheitsfunktion gegen Überdruck zwischen dem Kryotank 1 und dem Dreiwege-Druckregler 9, die weiter unten anhand einer Funktionsbeschreibung näher erläutert wird.

Ein drittes Federelement 46 ist zwischen dem ersten Ventilkegel 27 und dem zweiten Ventilkegel 28 vorgesehen. Mittels des Federelementes 46 ist der Abstand zwischen den beiden Ventilkegeln 27, 28 in Sonderfällen veränderbar. Nähere Erläuterungen zu dieser Maßnahme ergeben sich aus der folgenden Funktionsbeschreibung für den erfindungsgemäßen Dreiwege-Druckregler 9:

Der Hauptstrom durchfließt den Dreiwege-Druckregler 9 von "C" nach "A", der Nebenstrom, - das heißt, der Teilstrom der durch den Konvektor 11 (Figur 1) geleitet wird - von "B" nach "A". Hauptstrom und Nebenstrom werden durch die beiden Drosseleinrichtungen (27, 37) bzw. (28, 38) gegensinnig geregelt. Hierzu sind die Ventilkegel 27, 28 über die Ventilstange 26 mechanisch miteinander gekoppelt. Dies führt dazu, daß bei einem Tankdruck oberhalb des Solldrucks die Membran 34 sich entsprechend dem Kräftegleichgewicht aus dem Druck an der Membran 34 und der entgegenwirkenden Kraft des Federelementes 35 verformt und die daran anliegende Ventilstange 26 entsprechend nach unten (in der Ansicht von Figur 2) verschiebt. Dadurch wird die zweite Drosseleinrichtung (28, 38) geöffnet und der freie Strömungsquerschnitt für den Hauptstrom vergrößert, während umgekehrt die erste Drosseleinrichtung (27, 37) geschlossen wird, so daß kein oder weniger Gas durch den Konvektor 11 fließt und ein weiterer Druckanstieg im Speicherbehälter 2 (Figur 1) vermieden wird. Bei Entnahme von kaltem Gas aus dem Speicherbehälter 2 sinkt der Tankdruck entsprechend, so daß die Ventilstange 26 nach oben gedrückt wird. Dadurch wird die erste Drosseleinrichtung (27, 37) geöffnet und der freie Strömungsquerschnitt für den Nebenstrom wird vergrößert, während der freie Strömungsquerschnitt für den Hauptstrom durch die zweite Drosseleinrichtung (28, 38) etwas verkleinert wird. Aufgrund des nun stärkeren Nebenstromes wird der Wärmeeintrag in den Kryotank erhöht und damit ein Ansteigen des Tankdrucks bewirkt, womit auch ein höherer Druck im Bereich des Gasaustritts "A" zum Verbraucher einhergeht. Der höhere Tankdruck führt wiederum zu einer Verschiebung der Ventilstange 26 nach unten und damit zu einer entsprechenden Reduzierung des Nebenstromes und zu einer Verstärkung des Hauptstromes. Dadurch ergibt sich ein selbstregelndes System, wobei durch das Öffnen der zweiten Drosseleinrichtung (28, 38) ein ausreichend großer Durchfluß des Hauptstromes gewährleistet werden kann, ohne daß es zu einem merklichen Druckabfall im Bereich des Gasaustritts "A" kommt. Dazu trägt auch die gegensinnige Kopplung der beiden Dosseleinrichtungen (27, 37), (28, 38) bei, indem bei geöffneter erster Dosseleinrichtung (27, 37) (und dementsprechend verringertem Öffnungsquerschnitt für den Hauptstrom), der von "B" nach "A" abfließende Nebenstrom zusätzlich zum Hauptstrom dem Verbraucher zugeführt wird.

Um einen Druckabfall im Bereich des Gasaustrittes A bei hohen kurzzeitigen Durchsätzen zum Verbraucher möglichst gering zu halten, sind die beiden Ventilkegel 27, 28 nicht starr zueinander an der Ventilstange 26 fixiert, sondern durch das dritte Federelement 46 beweglich gegeneinander angeordnet. Dies hat den Vorteil, daß sich bei kurzzeitig erhöhter Entnahme am Verbraucher A der obere Ventilkegel 28 aufgrund der erhöhten Druckdifferenz a, Kegel 28 entgegen dem Federelement 46 nach unten bewegen kann und dadurch die zweite Drosseleinrichtung (28, 38) für den Hauptstrom weiter öffnet, selbst wenn die Drosseleinrichtung (27, 37) für den Nebenstrom geöffnet ist. Dadurch wird bei stark dynamischen Vorgängen, wie kurzzeitig hoher Gasentnahme am Verbraucher A vermieden, daß der Druck in der Entnahmeleitung zum Verbraucher über Gebühr abfällt. Diese Funktionsweise ist besonders vorteilhaft, wenn kurzfristig hohe Durchsätze am Verbraucher A benötigt werden, wie beispielsweise bei Beschleunigungsvorgängen (Sekundenreserve). Dabei wird das Gasvolumen in der Entnahmeleitung 5 und in der Hauptstrom-Leitung 8 (Figur 1) als kurzzeitiger Speicher genutzt werden.

Die Druckfeder 45 erfüllt auch eine Sicherheitsfunktion gegen Überdruck zwischen dem Kryotank und dem Dreiwege-Druckregler 9. Dies betrifft insbesondere den Betriebsfall mit nur minimaler Gasentnahme am Gasaustritt "A", wie zum Beispiel bei Leerlauf des Wasserstoffmotors. In dem Fall ist die erste Drosseleinrichtung (27, 37) vollständig verschlossen, wobei der Dichtring 30 einen Leckstrom und damit eine unnötige Erwärmung des Kryotanks verhindert. Dabei kann es jedoch zu einer Erwärmung des in der Nebenstrom-Leitung 14 (Figur 1) enthaltenen Wasserstoffes und damit zu einem Druckanstieg kommen. Um einen Rückströmen des erwärmten Wasserstoffes in den Kryotank zu verhindern, ist in der Nebenstrom-Leitung 14 ein (in der Figur nicht dargestelltes) Rückschlagventil vorgesehen. Bei einem Druckanstieg über einen einstellbaren Grenzwert hinaus wirkt der erste Ventilkegel 27 wie ein Sicherheitsventil, indem der Druck am Gaseintritt B an der Wirkfläche des Ventilkegels 27 eine Kraft erzeugt, die den Ventilsitz 37 entgegen der nach unten gerichteten Kraft der Druckfeder 45 öffnet und das erwärmte Gas aus der Nebenstrom-Leitung 14 entweichen läßt.

In einer alternativen (in Figur 2 nicht dargestellten) Ausführungsform des Dreiwege-Druckreglers 9 wird auf die Innenbohrung 48 und auf den Dichtring 33 verzichtet. Dadurch ist der Druckraum 31 mit dem Gaseintritt "B" fluidisch verbunden. Die Regelung erfolgt dabei durch Vergleich des vorgegebenen Druck-Sollwertes mit dem Druck am Gaseintritt "B". Die Druckunterschiede zwischen dem Tankdruck und dem Druck am Gaseintritt "B" sind im Normalfall gering, so daß auch diese Ausführungsform ein gutes Regelverhalten zeigt. In einer vorteilhaften Ausführungsvariante hierzu wird die fluidische Verbindung zwischen Druckraum 31 und Gaseintritt "B" durch eine Durchgangsbohrung im Führungselement 32 erzeugt; der Dichtring 33 kann dann beibehalten werden.

## Patentansprüche

1. Verfahren für die Regelung des Tankdrucks in einem ein kaltes Gas enthaltenden Kryotank (1) bei Entnahme eines Verbraucher-Hauptstromes (15), wobei erwärmtes Gas als in Abhängigkeit vom Tankdruck geregelter Heizgas-Nebenstrom (14) durch eine Rohrleitung (10, 12) durch den Kryotank (1) geleitet wird, **dadurch gekennzeichnet, daß** der Nebenstrom (14) nach Durchströmen des Kryotanks (1) und der Hauptstrom (8) einer dem Kryotank (1) nachgeordneten Druckregel-Einrichtung (9) zugeführt werden, die eine erste einstellbare Drossel (27,37) für den Nebenstrom (14) und eine zweite einstellbare Drossel (28,38) für den Hauptstrom (8) aufweist, wobei die Drosseln ((27,37); (28,38)) derart miteinander gekoppelt sind, daß sie in Abhängigkeit vom Tankdruck gegensinnig geöffnet und geschlossen werden.

2. Verfahren nach Anspruch 1, **dadurch gekennzeichnet, daß** dem Kryotank (1) ein Primärgas-Strom (5) entnommen wird, aus dem der Hauptstrom (8) und der Nebenstrom (14) abgezweigt werden.

3. Verfahren nach Anspruch 1 oder 2, **dadurch gekennzeichnet, daß** als Druckregel Einrichtung ein Dreiwege-Druckregler (9) eingesetzt wird und daß der Hauptstrom (8) einem ersten Gaseintritt (C) und der Nebenstrom (14) einem zweiten Gaseintritt (B) des Dreiwege-Druckreglers (9) zugeführt werden.

4. Verfahren nach Anspruch 3, **dadurch gekennzeichnet, daß** der Nebenstrom (14) durch den Kryotank (1) geleitet, erwärmt und anschließend dem zweiten Gaseintritt (B) der Druckregel-Einrichtung (9) zugeführt wird.

5. Verfahren nach einem der Ansprüche 1 bis 4, **dadurch gekennzeichnet, daß** - in Strömungsrichtung des Nebenstromes (14) gesehen - im Bereich nach der ersten Drossel (27,37) der Nebenstrom (14) dem Hauptstrom (8) hinzugefügt wird.

6. Verfahren nach einem der Ansprüche 1 bis 5, **dadurch gekennzeichnet, daß** das Gas im Kryotank (1) in einer flüssigen Phase (4) und einer gasförmigen Phase (4a) vorliegt, und daß der Verbraucher-Hauptstrom (8) aus der gasförmigen Phase (4a) entnommen wird.

7. Verfahren nach einem der Ansprüche 1 bis 6, **dadurch gekennzeichnet, daß** als Gas verflüssigter Wasserstoff, verflüssigter Stickstoff oder flüssiges Erdgas eingesetzt wird.

8. Vorrichtung für die Regelung des Tankdrucks in einem Kryotank (1) bei Entnahme mindestens eines Verbraucher-Hauptstromes, mit einem thermisch isolierten Speicherbehälter (2) für die Aufnahme eines kalten Gases, der mit einer Entnahmeleitung (5) für die Entnahme eines Gasstromes verbunden ist, mit einer Vorrichtung (7, 13) zum Erwärmen des Gasstromes, einer Rohrleitung (10, 12), welche durch den Speicherbehälter (1) führt, und mit einer Druckregel-Einrichtung (9) mittels der der Gasstrom als Heizgas-Nebenstrom in Abhängigkeit vom Tankdruck geregelt durch eine Rohrleitung (14) geleitet wird, **dadurch gekennzeichnet, daß** die dem Kryotank (1) nachgeordnete Druckregel-Einrichtung (9) eine erste einstellbare Drossel (27, 37) für die Regelung des Nebenstromes (14) und eine zweite einstellbare Drossel (28, 38) für die Regelung des Hauptstromes (8) aufweist, wobei die Drosseln ((27,37); (28,38)) derart miteinander gekoppelt sind, daß sie in Abhängigkeit vom Tankdruck gegensinnig geöffnet und geschlossen werden.

9. Vorrichtung nach Anspruch 8, **dadurch gekennzeichnet, daß** aus der Entnahmeleitung (5) eine Hauptstrom-Leitung (8) zur Entnahme des Hauptstromes und eine Nebenstrom-Leitung (14) zur Entnahme des Nebenstromes abgezweigt wird.

10. Vorrichtung nach Anspruch 8 oder 9, **dadurch gekennzeichnet, daß** die Druckregel-Einrichtung als Dreiwege-Druckregler (9) ausgebildet ist, der einen Gasaustritt (A), einen ersten Gaseintritt (C) für den Hauptstrom und einen zweiten Gaseintritt (B) für den Nebenstrom aufweist.

11. Vorrichtung nach einem der Ansprüche 8 bis 10, **dadurch gekennzeichnet, daß** die erste Drossel (27,37) und die zweite Drossel (28,38) über ein in Abhängigkeit vom Tankdruck bewegbares Kopplungselement (26) mechanisch miteinander verbunden sind.

12. Vorrichtung nach Anspruch 11, **dadurch gekennzeichnet, daß** das Kopplungselement eine Ventilstange (26) umfaßt, die in Abhängigkeit vom Tankdruck in Richtung ihrer Längsachse (29) bewegbar ist, und an der ein erster Ventilkegel (27) und ein zweiter Ventilkegel (28) beabstandet voneinander gehalten werden, und daß die Drosseln ((27,37); (28,38)) jeweils einen Ventilsitz (37,38) für die Aufnahme eines der Ventilkegel (27,28) aufweisend durch Bewegung der Ventilstange (26) geöffnet oder geschlossen werden.

13. Vorrichtung nach Anspruch 12, **dadurch gekennzeichnet, daß** die Ventilstange (26) sich zwischen einem oberen Druckraum, an dem der Tankdruck anliegt und einem unteren geschlossenen Druckraum (31), in dem ein auf die Ventilstange (26) einwirkendes Druckelement (34), an dem ein vorgegebener Solldruck anliegt, vorgesehen ist, erstreckt.

14. Vorrichtung nach einem der Ansprüche 11 bis 13, **dadurch gekennzeichnet, daß** die Ventilstange (26) eine Bohrung (38) aufweist, die den oberen und den unteren Druckraum fluidisch verbindet.

15. Vorrichtung nach Anspruch 14, **dadurch gekennzeichnet, daß** die Bohrung (48) mit einer Drosselstelle (39) versehen ist.

16. Vorrichtung nach einem der Ansprüche 11 bis 15, **dadurch gekennzeichnet, daß** die Ventilstange (26) durch mindestens zwei beabstandet voneinander angeordnete Führungselemente (32; 41) geführt wird.

17. Vorrichtung nach Anspruch 16, **dadurch gekennzeichnet, daß** die Druckregel-Einrichtung (9) ein Gehäuse (20) mit einem abnehmbaren Oberteil (41) und mit einem Unterteil (25) aufweist, und daß eines der Führungselemente (49) im Oberteil (41) und das andere Führungselement (32) im Unterteil (25) ausgebildet ist.

18. Vorrichtung nach einem der Ansprüche 11 bis 17, **dadurch gekennzeichnet, daß** bei mindestens einem der Ventilkörper (27, 28) die Oberfläche teilweise oder vollständig aus Kunststoff, vorzugsweise aus Polyamid, besteht.

## Claims

1. Method for regulating the tank pressure in a cryogenic tank (1) containing a cold gas during withdrawal of a main stream (15) for a consumer, heated gas being led as a secondary stream (14) of hot gas regulated as a function of the tank pressure through a pipeline (10, 12) through the cryogenic tank (1), **characterized in that** the secondary stream (14) after flowing through the cryogenic tank (1), and the main stream (8) are fed to a pressure regulating device (9) which is arranged downstream of the cryogenic tank (1) and has a first adjustable throttle (27, 37) for the secondary stream (14) and a second adjustable throttle (28, 38) for the main stream (8), the throttles ((27, 37); (28, 38)) being coupled to one another in such a way that they are opened and closed in opposite directions as a function of the tank pressure.

2. Method according to Claim 1, **characterized in that** there is withdrawn from the cryogenic tank (1) a primary gas stream (5) from which the main stream (8) and the secondary stream (14) are branched off.

3. Method according to Claim 1 or 2, **characterized in that** a three-way pressure regulator (9) is used as pressure regulating device, and **in that** the main stream (8) is fed to a first gas inlet (C), and the secondary stream (14) is fed to a second gas inlet (B) of the three-way pressure regulator (9).

4. Method according to Claim 3, **characterized in that** the secondary stream (14) is led through the cryogenic tank (1), heated and subsequently fed to the second gas inlet (B) of the pressure regulating device (9).

5. Method according to one of Claims 1 to 4, **characterized in that** - seen in the flow direction of the secondary stream (14) - the secondary stream (14) is added to the main stream (8) in the region following the first throttle (27 or 37).

6. Method according to one of Claims 1 to 5, **characterized in that** the gas is present in the cryogenic tank (1) in a liquid phase (4) and a gaseous phase (4a) and **in that** the main stream (8) for a consumer is withdrawn from the gaseous phase (4a).

7. Method according to one of Claims 1 to 6, **characterized in that** liquefied hydrogen, liquefied nitrogen or liquid natural gas is used as gas.

8. Apparatus for regulating the tank pressure in a cryogenic tank (1) during withdrawal of at least one main stream for a consumer, having a thermally insulated reservoir (2) for holding a cold gas which is connected to a withdrawal line (5) for withdrawing a gas stream, having an apparatus (7, 13) for heating the gas stream, a pipeline (10, 12) which is guided through the reservoir (2), and having a pressure regulating device (9) by means of which the gas stream in the form of a secondary stream of heating gas is led through a pipeline (14) in a fashion regulated as a function of the tank pressure, **characterized in that** the pressure regulating device (9) downstream of the cryogenic tank (1) has a first adjustable throttle (27, 37) for regulating the secondary stream (14) and a second adjustable throttle (28, 38) for regulating the main stream (8), the throttles ((27, 37); (28, 38)) being coupled to one another in such a way that they are opened and closed in opposite directions as a function of the tank pressure.

9. Apparatus according to Claim 8, **characterized in that** a main stream line (8) for withdrawing the main stream, and a secondary stream line (14) for withdrawing the secondary stream are branched off from the withdrawal line (5).

10. Apparatus according to Claim 8 or 9, **characterized in that** the pressure regulating device is designed as a three-way pressure regulator (9) which has a gas outlet (A), a first gas inlet (C) for the main stream, and a second gas inlet (B) for the secondary stream.

11. Apparatus according to one of Claims 8 to 10, **characterized in that** the first throttle (27, 37) and the second throttle (28, 38) are mechanically connected to one another via a coupling element (26) which can be moved as a function of the tank pressure.

12. Apparatus according to Claim 11, **characterized in that** the coupling element comprises a valve rod (26) which can be moved in the direction of its longitudinal axis (29) as a function of the tank pressure, and on which a first valve cone (27) and a second valve cone (28) are held spaced apart from one another, and **in that** the throttles ((27, 37); (28,38)), which respectively have a valve seat (37, 38) for receiving one of the valve cones (27, 28), are opened or closed by moving the valve rod (26).

13. Apparatus according to Claim 12, **characterized in that** the valve rod (26) extends between an upper pressure chamber at which the tank pressure prevails, and a lower closed pressure chamber (31) in which there is provided a pressure element (34) which acts on the valve rod (26) and at which a prescribed desired pressure prevails.

14. Apparatus according to one of Claims 11 to 13, **characterized in that** the valve rod (26) has a bore (48) which provides a fluid connection between the upper and the lower pressure chamber.

15. Apparatus according to Claim 14, **characterized in that** the bore (48) is provided with a throttling point (39).

16. Apparatus according to one of Claims 11 to 15, **characterized in that** the valve rod (26) is guided through at least two guide elements (32; 41) arranged spaced apart from one another.

17. Apparatus according to Claim 16, **characterized in that** the pressure regulating device (9) has a housing (20) with a removable top part (41) and with a bottom part (25), and **in that** one of the guide elements (49) is constructed in the top part (41), and the other guide element (32) is constructed in the bottom part (25).

18. Apparatus according to one of Claims 11 to 17, **characterized in that** the surface of at least one of the valve bodies (27, 28) consists partially or completely of plastic, preferably of polyamide.

## Revendications

1. Procédé pour réguler la pression de réservoir dans un réservoir cryogénique (1) contenant un gaz froid, lors du prélèvement d'un courant principal de consommation (15), du gaz réchauffé étant guidé à travers le réservoir cryogénique (1) par une conduite tubulaire (10, 12) en tant que courant secondaire de gaz chaud (14) régulé en fonction de la pression de réservoir, **caractérisé en ce que** le courant secondaire (14), après avoir traversé le réservoir cryogénique (1), et le courant principal (8) sont acheminés à un dispositif de régulation de pression (9) placé après le réservoir cryogénique (1), lequel présente un premier étranglement ajustable (27, 37) pour le courant secondaire (14) et un deuxième étranglement ajustable (28, 38) pour le courant principal (8), les étranglements (27, 37, 28, 38) étant accouplés les uns aux autres de telle sorte qu'ils soient ouverts et fermés en sens inverse en fonction de la pression du réservoir.

2. Procédé selon la revendication 1, **caractérisé en ce que** l'on prélève du réservoir cryogénique (1) un courant de gaz primaire (5) duquel le courant principal (8) et le courant secondaire (14) sont dérivés.

3. Procédé selon la revendication 1 ou 2, **caractérisé en ce que** l'on utilise comme dispositif de régulation de pression un régulateur de pression à trois voies (9) et **en ce que** le courant principal (8) est acheminé à une première entrée de gaz (C) et le courant secondaire (14) est acheminé à une deuxième entrée de gaz (B) du régulateur de pression à trois voies (9).

4. Procédé selon la revendication 3, **caractérisé en ce que** le courant secondaire (14) est guidé à travers le réservoir cryogénique (1), réchauffé et ensuite acheminé à la deuxième entrée de gaz (B) du dispositif de régulation de pression (9).

5. Procédé selon l'une quelconque des revendications 1 à 4, **caractérisé en ce que**, vu dans le sens de l'écoulement du courant secondaire (14), le courant secondaire (14) est ajouté au courant principal (8) dans la région après le premier étranglement (27, 37).

6. Procédé selon l'une quelconque des revendications 1 à 5, **caractérisé en ce que** le gaz dans le réservoir cryogénique (1) se présente en phase liquide (4) et en phase gazeuse (4a), et **en ce que** le courant principal de consommation (8) est prélevé de la phase gazeuse (4a).

7. Procédé selon l'une quelconque des revendications 1 à 6, **caractérisé en ce que** l'on utilise comme gaz de l'hydrogène liquide, de l'azote liquide ou du gaz naturel liquide.

8. Dispositif pour réguler la pression de réservoir dans un réservoir cryogénique (1), lors du prélèvement d'au moins un courant principal de consommation, comprenant un réservoir de stockage isolé thermiquement (2) pour recevoir un gaz froid, qui est connecté à une conduite de prélèvement (5) pour prélever un courant de gaz, un dispositif (7, 13) pour réchauffer le courant de gaz, une conduite tubulaire (10, 12) qui conduit à travers le réservoir de stockage (2), et un dispositif de régulation de pression (9) au moyen duquel le courant de gaz est guidé à travers une conduite tubulaire (14) sous forme de courant secondaire de gaz chaud de manière régulée en fonction de la pression de réservoir, **caractérisé en ce que** le dispositif de régulation de pression (9) disposé après le réservoir cryogénique (1) présente un premier étranglement ajustable (27, 37) pour la régulation du courant secondaire (14) et un deuxième étranglement ajustable (28, 38) pour la régulation du courant principal (8), les étranglements (27, 37, 28, 38) étant accouplés les uns aux autres de telle sorte qu'ils soient ouverts et fermés en sens inverse en fonction de la pression du réservoir.

9. Dispositif selon la revendication 8, **caractérisé en ce qu'**une conduite de courant principal (8) pour prélever le courant principal et une conduite de courant secondaire (14) pour prélever le courant secondaire sont dérivées de la conduite de prélèvement (5).

10. Dispositif selon la revendication 8 ou 9, **caractérisé en ce que** le dispositif de régulation de pression est réalisé sous forme de régulateur de pression à trois voies (9) qui présente une sortie de gaz (A), une première entrée de gaz (C) pour le courant principal et une deuxième entrée de gaz (B) pour le courant secondaire.

11. Dispositif selon l'une quelconque des revendications 8 à 10, **caractérisé en ce que** le premier étranglement (27, 37) et le deuxième étranglement (28, 38) sont connectés mécaniquement l'un à l'autre par le biais d'un élément d'accouplement (26) déplaçable en fonction de la pression de réservoir.

12. Dispositif selon la revendication 11, **caractérisé en ce que** l'élément d'accouplement comprend une tige de soupape (26) qui peut être déplacée en fonction de la pression de réservoir dans la direction de son axe longitudinal (29), et au niveau de laquelle un premier cône de soupape (27) et un deuxième cône de soupape (28) sont maintenus espacés l'un de l'autre, et **en ce que** les étranglements (27, 37, 28, 38), présentant chacun un siège de soupape (37, 38) pour recevoir l'un des cônes de soupape (27, 28), sont ouverts et fermés par déplacement de la tige de soupape (26).

13. Dispositif selon la revendication 12, **caractérisé en ce que** la tige de soupape (26) s'étend entre un espace de pression supérieur auquel la pression de réservoir s'applique et un espace de pression fermé inférieur (31) dans lequel est prévu un élément de pression (34) agissant sur la tige de soupape (26), au niveau duquel s'applique une pression de consigne prédéterminée.

14. Dispositif selon l'une quelconque des revendications 11 à 13, **caractérisé en ce que** la tige de soupape (26) présente un alésage (38) qui relie fluidiquement les espaces de pression supérieur et inférieur.

15. Dispositif selon la revendication 14, **caractérisé en ce que** l'alésage (48) est pourvu d'un point d'étranglement (39).

16. Dispositif selon l'une quelconque des revendications 11 à 15, **caractérisé en ce que** la tige de soupape (26) est guidée à travers au moins deux éléments de guidage (32 ; 41) espacés l'un de l'autre.

17. Dispositif selon la revendication 16, **caractérisé en ce que** le dispositif de régulation de pression (9) présente un boîtier (20) avec une partie supérieure amovible (41) et avec une partie inférieure (25), et **en ce que** l'un des éléments de guidage (49) est réalisé dans la partie supérieure (41) et l'autre élément de guidage (32) est réalisé dans la partie inférieure (25).

18. Dispositif selon l'une quelconque des revendications 11 à 17, **caractérisé en ce que** pour au moins l'un des corps de soupape (27, 28), la surface est constituée en partie ou complètement de plastique, de préférence de polyamide.
